# EUROPÄISCHE PATENTSCHRIFT

(11) **EP 2 333 919 B1**
(45) Veröffentlichungstag und Bekanntmachung des Hinweises auf die Patenterteilung: **11.06.2014**
(21) Anmeldenummer: 10193671.4
(22) Anmeldetag: 03.12.2010
(51) Int. Cl.: H02G 3/00, B60R 16/02, H01R 4/24, H01R 12/61, H01B 7/00

(54) **Elektrische Kabelanordnung**
Electric cable assembly
Agencement de câble électrique

(30) Priorität: 08.12.2009 DE 102009044809
(43) Veröffentlichungstag der Anmeldung: 15.06.2011
(73) Patentinhaber: BPW Bergische Achsen KG, 51674 Wiehl (DE)
(72) Erfinder: Schneider, Peter, 51597, Morsbach (DE); Walter, Bernhard, 58553, Halver (DE)
(74) Vertreter: Christophersen, Ulrich Rudolf

(56) Entgegenhaltungen:
- EP-A1- 0 470 887
- EP-A1- 0 696 034
- EP-A2- 0 154 800
- EP-A2- 1 892 731
- DE-A1-102004 036 341
- DE-C2- 3 405 302
- DE-U- 7 024 588

## Beschreibung

Die Erfindung betrifft eine elektrische Kabelanordnung mit einem extrudierten Hauptkabel, welches über seine Länge mit einer Mehrzahl im Abstand zueinander abgeordneter, jeweils zu Einzelverbrauchern führenden Abzweigungen versehen ist, die sich jeweils aus einem mindestens zweiadrigen Abzweigkabel und einem den Anfang des Abzweigkabels umschließenden Abzweiggehäuse zusammensetzen, welches mit einer rinnenförmigen Schale auf dem Hauptkabel aufsitzt, wobei mit den Adern des Abzweigkabels verbundene Stech- oder Schneidkontakte die Adern des Hauptstrangs kontaktieren, und sich das Hauptkabel aus einem ersten Strang mit mindestens zwei Stromadern und einem Parallelstrang mit mindestens einer weiteren Stromader zusammensetzt, und dass die beiden Stränge über einen mitextrudierten Steg verbunden sind, der auf jenen Längsabschnitten, auf denen sich rinnenförmige Schalen befinden, jeweils mit einer Unterbrechung versehen ist, die mindestens die Länge des Gehäusebereichs aufweist.

Solche Kabelanordnungen finden Verwendung in der Fahrzeugtechnik und insbesondere bei der elektrischen Verkabelung von Anhängerfahrzeugen, wie z. B. Sattelaufliegern. Diese Fahrzeuge verfügen wegen der Länge und Größe ihres Fahrzeugaufbaus nicht nur über die üblichen Rückleuchteneinheiten mit Rücklicht, Bremslicht und Blinkleuchten, sondern über eine Vielzahl an Zusatzleuchten, die im Regelfall zusammen mit dem Stand- und Abblendlicht des Zugfahrzeugs geschaltet sind. Zu diesen Zusatzleuchten gehören Seitenleuchten, die in Abständen längs der Aufbaulänge des Fahrzeugs angeordnet sind, um so das Fahrzeug in der Dunkelheit von der Seite her besser erkennbar zu machen. Ferner gehören zu den Zusatzleuchten Positionsleuchten, welche oben am Fahrzeugaufbau angeordnet sind. Die Spannungsversorgung der Zusatzleuchten erfolgt in der Regel über den zur Rückleuchteneinheit führenden Kabelstrang. Bei herkömmlichen Beleuchtungssystemen besteht dieser aus einer Vielzahl von einem Hauptkabel abzweigender Einzeladern, die die einzelnen Funktionsleuchten (Bremslicht, Blinkleuchte) sowie das Dauerlicht (Rücklicht, Zusatzleuchten) elektrisch versorgen. Zur Vermeidung dieser Vielzahl an elektrischen Adern arbeiten moderne Beleuchtungssysteme zur Versorgung der Funktionsleuchten z. B. mit einem zweiadrigen BUS-Strang, über dessen Plusader nicht nur die Betriebsspannung für die Versorgung der Funktionsleuchten, sondern zusätzlich eine überlagerte Signalspannung geführt ist. Dies reduziert die Anzahl der Adern im Hauptkabel und den kabeltechnischen Aufwand, jedoch ist die Einbeziehung auch der auf Dauerlicht, d.h. zusammen mit dem Fahrlicht geschalteten Zusatzleuchten schwierig. Zwar ließen sich auch diese über das BUSSystem ansteuern, jedoch würde dies in den einzelnen Zusatzleuchten jeweils eine Empfangs- und Umsetzungseinheit für BUS-Signale erfordern, was die Kosten für die Zusatzleuchten stark erhöhen würde.

Daher besteht ein Bedürfnis für eine elektrische Kabelanordnung, die bei einfachem Aufbau eine flexible elektrische Anbindung solcher zusätzlicher Verbraucher ermöglicht, die häufig mit Dauerstrom oder länger eingeschaltetem Strom versorgt werden müssen.

Eine elektrische Kabelanordnung mit den Merkmalen des Oberbegriffs des Patentanspruchs 1 ist aus der EP 0 154 800 A bekannt.

Zur Lösung dieser Aufgabe wird bei einer elektrischen Kabelanordnung der eingangs angegebenen Art vorgeschlagen, dass sich die kontaktierten Adern in dem ersten Strang befinden, wohingegen der Parallelstrang außerhalb des Abzweiggehäuses verläuft, und dass eine Wand des Abzweiggehäuses sich zwischen dem ersten Strang und dem Parallelstrang erstreckt.

Mit einer ersten Ausgestaltung der Kabelanordnung wird vorgeschlagen, dass der Steg längsperforiert ist, wobei vorzugsweise die Perforationsöffnungen der Längsperforierung jeweils kürzer als die rinnenförmigen Schalen sind, und die nicht perforierten Stegabschnitte Schwächungszonen aufweisen, die unter quer zum Hauptkabel ausgeübten Zugkräften aufreißbar und/oder mit Hilfsmitteln auftrennbar sind.

Gemäß einer alternativen Ausgestaltung sind die Perforationsöffnungen jeweils länger als die rinnenförmigen Schalen, wobei einzelne dieser Perforationsöffnungen zugleich die Unterbrechungen bilden.

Gemäß einer weiteren Ausführungsform ist der Steg durchgehend und weist in Längsrichtung betrachtet Schwächungszonen auf, die unter quer zum Hauptkabel ausgeübten Zugkräften aufreißbar und/oder mit Hilfsmitteln auftrennbar sind.

Gemäß einer weiteren Ausführungsform erstreckt sich durch die Unterbrechung hindurch eine Wand des Abzweiggehäuses, wobei die Wand in einem in einer Spitze auslaufenden Dreieck endet. Diese Ausgestaltung ist produktionstechnisch von Vorteil, da es durch die am Abzweiggehäuse angeformte Schneide bei einem Niederdrücken des Abzweiggehäuses auf den Strang von selbst zu einem Durchtrennen aller auf dem Längsabschnitt angeordneter Stegabschnitte kommt.

Ausführungsbeispiele der Erfindung werden im Folgenden unter Bezugnahme auf die Zeichnung beschrieben. Darin zeigen
- Fig. 1: in einer stark schematischen Darstellung das elektrische Layout einer Fahrzeugbeleuchtungsvorrichtung eines aus einem Zugfahrzeug und einem Anhängerfahrzeug bestehenden Fahrzeugverbandes;
- Fig. 2: die Ansicht eines Längsabschnitts einer elektrischen Kabelanordnung im Bereich einer Abzweigung;
- Fig. 3: einen Schnitt entlang der Schnittlinie III - III durch die elektrische Kabelanordnung im Bereich der Abzweigung;
- Fig. 4: einen Schnitt entlang der Schnittlinie IV - IV durch die elektrische Kabelanordnung im Bereich der Abzweigung;
- Fig. 5: einen Schnitt durch zwei hier getrennt wiedergegebene Gehäuseteile eines Abzweiggehäuses;
- Fig. 6: die Ansicht eines Längsabschnitts einer zweiten Ausführungsform einer elektrischen Kabelanordnung im Bereich einer Abzweigung;
- Fig. 7: einen Schnitt entlang der Schnittlinie VII - VII durch die elektrische Kabelanordnung im Bereich der Abzweigung und
- Fig. 8: einen Schnitt entlang der Schnittlinie VIII - VIII durch die elektrische Kabelanordnung im Bereich der Abzweigung.

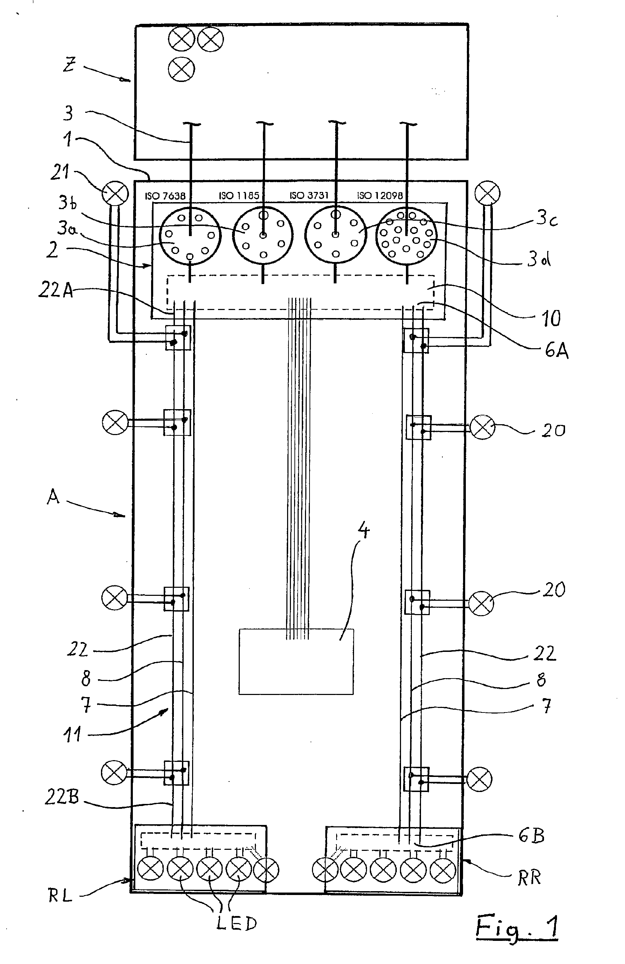

In Fig. 1 dargestellt ist die lichttechnische elektrische Ausrüstung eines Nutzfahrzeuges, welches sich aus einem - angetriebenen - Zugfahrzeug Z und einem -gezogenen - Anhänger oder Sattelauflieger A zusammensetzt. Für die elektrische Verbindung mit dem Zugfahrzeug Z ist nahe der vorderen Bordwand 1 des Anhängerfahrzeuges A eine elektrische Anschlussbox 2 befestigt. Diese enthält, dem Zugfahrzeug Z zugewandt, mindestens einen Verbindungssteckanschluss, über den sich eine lösbare elektrische Kabelverbindung 3 mit entsprechenden elektrischen Anschlüssen oder Verbindungssteckern am Zugfahrzeuges Z herstellen lässt. Für den anhängerseitigen Anschluss der Kabelverbindung 3 zeigt die Zeichnung mehrere unterschiedliche Varianten von ISO-Verbindungssteckanschlüssen 3a bis 3d.

Am anderen, d. h. rückwärtigen Ende des Fahrzeuganhängers A befindet sich in üblicher Weise eine linke Rückleuchte RL und eine rechte Rückleuchte RR, die jeweils in Rückleuchteneinheiten zusammengefasst sind und üblicherweise die Lichtfunktionen einer Bremsleuchte, einer jeweiligen Blinkerleuchte, des Rücklichts und ggf. eines Rückfahrlichts, einer Nebelschlussleuchte oder der Kennzeichenbeleuchtung ausführen. Zumindest die Bremseinheit und die Blinkereinheit der Rückleuchteneinheiten RL, RR können statt mit herkömmlichen Glühbirnen mit Leuchtdioden (LED) und entsprechenden Vorschaltwiderständen für die Leuchtdioden bestückt sein. Die Leuchtdioden sind üblicherweise nach Art einer Matrix geschaltet, bestehend aus parallelen LED-Reihen, die ihrerseits aus mehreren LED bestehen. In jedem Rückleuchtengehäuse befindet sich ferner eine BUS-Signalanbindung eines die Rückleuchteneinheiten mit elektrischer Spannung sowie mit den Ein- und Ausschaltsignalen für die einzelnen Lichtfunktionen versorgenden BUS-Systems.

In der Anschlussbox 2 befindet sich die einen Prozessor (CPU) aufweisende zentrale Lichtsteuereinheit (ECU) 10 des Fahrzeuganhängers. Diese kann entweder in der Weise ausgestaltet sein, dass sie der zentrale Logistikknoten nur der Beleuchtungs- und Lichttechnik des Fahrzeuganhängers ist, oder aber die Lichtsteuereinheit 10 kann signaltechnisch mit anderen Steuerkomponenten des Fahrzeuges verknüpft sein, z. B. mit einem elektronischen Bremsensteuergerät 4 des Fahrzeuges.

Die zentrale Lichtsteuereinheit 10 steht über eine sich über die Fahrzeuglänge erstreckende elektrische Kabelanordnung mit den Rückleuchteneinheiten RL, RR in Verbindung. Das Hauptkabel 11 dieser Kabelanordnung ist dreiadrig und enthält unter anderem eine als bidirektionaler DC-BUS 7 arbeitende Leitung mit positivem Potential, und den das negative Potential aufweisenden Masseleiter 8. Die BUS-Stränge 7, 8 arbeiten mit Gleichspannung, vorzugsweise der Gleichspannung des 24-Volt-Bordnetzes des Zugfahrzeuges, wobei der Gleichspannung zur Übertragung von Informationen zusätzlich BUS-Signale aufmoduliert sind.

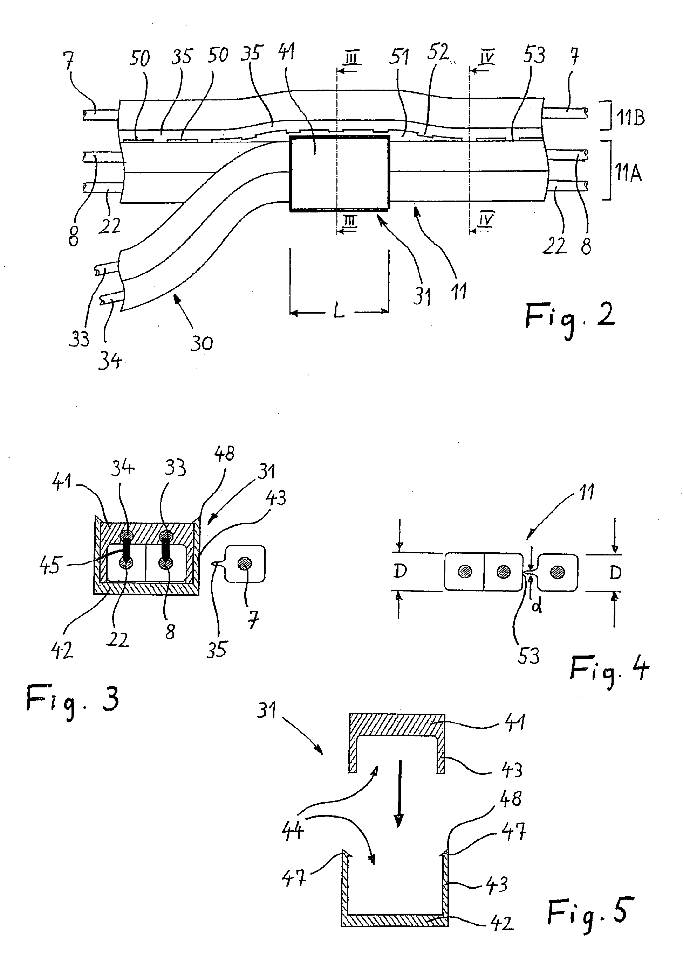

Gemäß Fig. 2 ist jeder BUS-Strang 7, 8 zum Aufmodulieren bzw. Auslesen der BUS-Signale auf Seiten der Anschlussbox 2 mit einer ersten BUS-Signalanbindung 6A, und auf Seiten jeder Rückleuchte RL, RR mit jeweils einer weiteren BUS-Signalanbindung 6B verbunden. Diese Kontaktierung des BUS-Strangs 7, 8 mit den Signalanbindungen erfolgt vorzugsweise durch entsprechende Kontakte.

Wird im Zugfahrzeug Z durch den Fahrer z. B. der Blinker rechts betätigt, wird der entsprechende, über die Kabelverbindung 3 und die Verbindungssteckanschlüsse geführte Stromkreis geschlossen, und dies wird durch eine Signalauswertung der zentralen Lichtsteuereinheit 10 detektiert. Die Lichtsteuereinheit 10 initiiert daraufhin den über das Hauptkabel 11 geführten Daten-BUS 7, 8 ein aufmoduliertes Signal zum Einschalten der LED der Blinklichter der rechten Rückleuchte RR. Die BUS-Signalanbindung empfängt das Signal und schaltet über integrierte Schaltelemente die LEDs des Blinklichts einzeln oder gruppenweise je nach deren Ausführung ein bzw. aus.

Anhängerfahrzeuge verfügen wegen ihrer großen Fahrzeuglänge von häufig mehr als sechs Metern über mehrere Seitenleuchten 20, die bei Dunkelheit der Seitenmarkierung des Fahrzeugaufbaus dienen. Ferner können am Fahrzeugaufbau vordere Umrissleuchten 21 und hintere Positionsleuchten angeordnet sein, die der Front- bzw. Heckmarkierung des Fahrzeugs bei Dunkelheit dienen. Die Spannungsversorgung der Seitenleuchten 20, der Umrissleuchten 21 und der Positionsleuchten erfolgt mit Gleichstrom des 24-Volt-Bordnetzes über eine eigene, auf positivem Potential liegende Plusader 22, die ebenso wie die Adern 7, 8 des BUS-Strangs Bestandteil des langen Hauptkabels 11 ist. Das Einschalten der Plusader 22 erfolgt mittels des Steuergerätes 10 beim Einschalten des Fahr- oder Abblendlichts im Zugfahrzeug, oder direkt durch Einschalten des Fahr- oder Abblendlichts im Zugfahrzeug.

Die Plusader 22 kann im Fall eines Defekts oder eines Ausfalls der BUS-Leitung 7 als Ersatzleitung dienen. Wird von der zentralen Lichtsteuereinheit 10 eine Störung oder ein Ausfall der BUS-Leitung 7 festgestellt, so schließt die Lichtsteuereinheit 10 die Plusader 22 anstatt der BUS-Leitung 7, so dass die BUS-Signale fortan über die Plusader 22 zu der jeweiligen Rückleuchteneinheit gelangen. Dies kann, muss aber nicht einhergehen mit einer gezielten Unterbrechung der gestörten BUS-Leitung 7. Der Ersatz der BUS-Leitung 7 durch die im selben Hauptkabel 11 mitgeführte Plusader 22 der Fahrzeugbeleuchtung setzt voraus, dass sich auch die Plusader 22 über den gesamten elektrischen Leitungsweg zwischen der BUS-Signalanbindung 6A der Lichtsteuereinheit und den BUS-Signalanbindungen der Rückleuchteneinheiten erstreckt. Daher ist jede Plusader 22 einerseits bis zum Ort der Signalbeaufschlagung in der steuergeräteseitigen BUS-Signalanbindung 6A, und anderseits bis zum Ort des Signalabgriffs in der rückleuchtenseitigen BUS-Signalanbindung 6B verlängert, wie dies in Fig. 1 die Leitungsabschnitte 22A und 22B der Plusader 22 wiedergeben.

Das Umschalten der BUS-Signale von der Ader 7 des BUS-Strangs auf die benachbarte Plusader 22 hat für die reguläre, der Versorgung der Seitenleuchten 20, der vorderen Umrissleuchten 21 und der hinteren Positionsleuchten mit Gleichspannung dienende Spannungsversorgung keinen Einfluss, da diese weiterhin erfolgt. Vielmehr ist sogar von Vorteil, dass der Notbetrieb für den Fahrer spätestens daraus erkennbar ist, dass auch bei ausgeschaltetem Fahr- bzw. Abblendlicht die Seitenleuchten 20, Umrissleuchten 21 und Positionsleuchten brennen. Zusätzlich kann dem Fahrer die Umschaltung auf den Notbetrieb gesondert angezeigt werden, etwa durch einen von der Lichtsteuereinheit 10 geschalteten Warnhinweis an der Armaturentafel des Zugfahrzeugs Z oder an der Anschlussbox 2 des Anhängers.

Zur Versorgung der einzelnen Seitenleuchten 20 sind die beiden Hauptkabel 11 jeweils über ihre Länge mit im Abstand zueinander angeordneten, jeweils zu einer Seitenleuchte 20 führenden Abzweigungen 15 versehen. Jede Abzweigung 15 befindet sich in einem Abzweiggehäuse 31, von dem aus ein Abzweigkabel 30 mit Adern 33, 34 zu der jeweiligen Seitenleuchte 20 führt. Einzelheiten im Bereich jeder Abzweigung 15 werden im Folgenden anhand der Fign. 2 bis 7 erläutert.

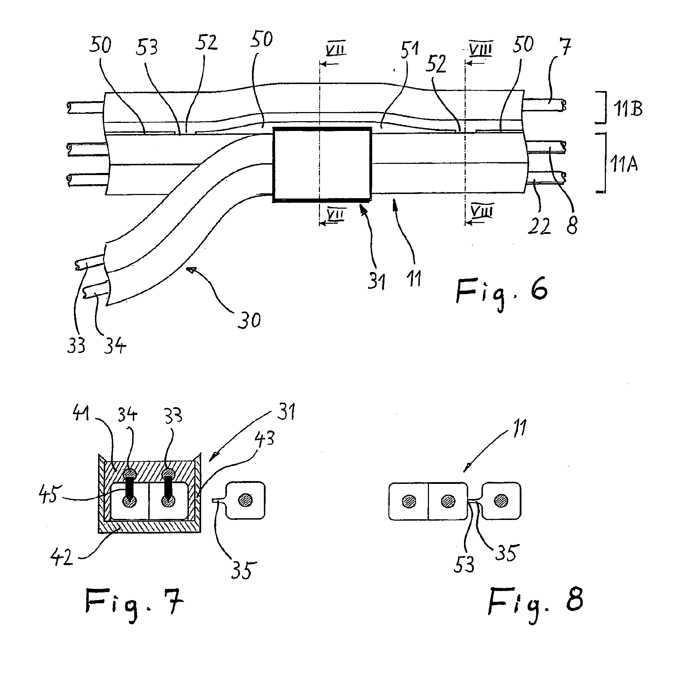

Das Hauptkabel 11 setzt sich einteilig aus einem ersten Strang 11A, in dessen Kunststoff die Plusader 22 und der Masseleiter 8 eingebettet sind, und einem Parallelstrang 11 B zusammen. Im Parallelstrang 11 B eingebettet verläuft die zu der Rückleuchteneinheit RL bzw. RR führende, BUS-Signale übertragende Ader 7 des bidirektionalen BUS. Gemäß Fig. 4 und Fig. 7 sind die beiden Stränge 11A, 11 B des Hauptkabels 11 normalerweise über einen Steg 35 miteinander verbunden. Der Steg 35 wird bei der Extrusion des isolierenden Kunststoffs des Hauptkabels 11 mit extrudiert, wobei die Querschnittsdicke d des Stegs 35 geringer ist, als die Querschnittsdicke D des Strangs 11A und des Parallelstrangs 11 B.

Die elektrische Kontaktierung der beiden Adern 33, 34 des Abzweigkabels 30 befindet sich innerhalb des Abzweiggehäuses 31. Das Abzweiggehäuse 31 besteht aus einem ersten Gehäuseteil 41 und einem zweiten Gehäuseteil 42. Das erste Gehäuseteil 41 ist schalenförmig gestaltet. Es bildet daher einen sich zu dem ersten Strang 11A hin rinnenförmig öffnenden Gehäusebereich 44. Dieser Bereich des Abzweiggehäuses ist daher so gestaltet, dass er den Strang 11A, in dem sich die zu kontaktierenden Adern befinden, an drei Seiten umschließt. Das zweite Gehäuseteil 42 ist gegen die Schale 44 des ersten Gehäuseteils 41 gesetzt, wodurch die beiden Gehäuseteile 41, 42 gemeinsam den Strang 11A des Hauptkabels 11 über die Gehäuselänge L umschließen.

Gemäß Fig. 5 lassen sich die Gehäuseteile 41, 42 mit Hilfe einstückig angeformter Verrastungen 47 dauerhaft miteinander verbinden.

In dem Gehäuseteil 41 sind zwei spitz auslaufende Stechkontakte 45 oder zwei eine scharfe Schneidkante aufweisende Schneidkontakte fest angeordnet, die innerhalb des Gehäuses mit den Adern 33, 34 des Abzweigkabels 30 elektrisch verbunden sind. Beim Niederdrücken des Gehäuseteils 41 auf das Hauptkabel 11 dringen die Spitzen bzw. Schneiden der Stech- oder Schneidkontakte 45 in den Masseleiter 8 und in die Plusader 22 ein, und stellen so den zur Spannungsversorgung der Seitenleuchten erforderlichen elektrischen Kontakt der Adern 33, 34 des Abzweigkabels 30 zu dem Masseleiter 8 und der Plusader 22 her.

Der Steg 35 kann durchgehend gestaltet sein. Bevorzugt ist jedoch die zeichnerisch dargestellte, unterbrochene Ausführung, bei der der Steg 35 in Kabellängsrichtung mit einer Vielzahl von Öffnungen, also Perforationsöffnungen 50 versehen ist, zwischen denen Stegabschnitte 52 verbleiben.

Bei der Ausführungsform nach den Fign. 2, 3 und 4 ist die Länge der einzelnen Perforationsöffnungen 50 geringer als die Gehäuselänge L. Um zwecks Kontaktierung des Hauptkabels das Abzweiggehäuse 31 aufsetzen zu können, muss daher eine Unterbrechung 51 der Steglänge geschaffen werden, durch welche Unterbrechung 51 hindurch sich die Wand 43 des Abzweiggehäuses 31 erstrecken kann. Die Unterbrechung 51 muss gleich lang oder länger als die Gehäuselänge L des schalenförmigen Gehäusebereichs 44 sein. Dies lässt sich in einfacher Weise dadurch bewerkstelligen, dass alle im Bereich der Länge L vorhandenen Stegabschnitte 52 aufgetrennt werden. Dies kann durch von Hand auf die Stränge 11A, 11 B ausgeübte Zugkräfte quer zum Hauptkabel 11 erfolgen, also durch bewusstes Aufreißen. Das Aufreißen der Stegabschnitte 52 wird erleichtert, indem diese Schwächungszonen 53 mit nochmals reduzierter Materialdicke aufweisen. Alternativ oder zusätzlich zu dem Aufreißen können die Stegabschnitte 52 auch mittels technischer Hilfsmittel durchtrennt werden. So kann z. B. die seitliche Wand 43 jedes der Gehäuseteile 41, 42 scharfkantig ähnlich einer Schneide gestaltet sein. Die Fig. 5 lässt erkennen, dass die seitliche Wand 43 des einen Gehäuseteils 42 in Richtung zu dem anderen Gehäuseteil 41 hin in einem spitzwinkligen, d.h. in einer scharfkantigen Spitze 48 auslaufenden Dreieck endet. Durch die so am Abzweiggehäuse 31 angeformte Schneide kommt es z. B. bei einem kräftigen Niederdrücken des Gehäuseteils 41 auf den Strang 11A von selbst zu einem Durchtrennen aller auf dem Längsabschnitt L angeordneter Stegabschnitte 52, was produktionstechnisch eine besonders vorteilhafte Ausgestaltung ist.

Durch diese elektrische Kabelanordnung lassen sich, bei einfachem Aufbau, beliebige weitere Zusatzleuchten 20, 21 auf einfache Weise an das Hauptkabel 11 anbinden. Dies kann zudem an beliebiger Stelle längs des Hauptkabels 11 erfolgen, weshalb die Kabelanordnung trotz der durchgängig gestalteten Adern des Hauptkabels sehr flexibel anwendbar ist, etwa bei unterschiedlichen Fahrzeugtypen. Geeignet ist die Kabelanordnung zur elektrischen Anbindung solcher zusätzlicher Verbraucher, die ebenfalls über die Plusader 22 mit Dauerstrom oder länger eingeschaltetem Strom versorgt werden müssen.

Bei der Ausführungsform nach den Fign. 6, 7 und 8 ist die Länge der einzelnen Perforationsöffnungen 50 größer als die Länge L des Abzweiggehäuses 31. Hier ist es also, um eine ausreichend große Unterbrechung 51 des Steges 35 zum Aufsetzen des Abzweiggehäuses 31 zur Verfügung zu haben, nicht erforderlich, Stegabschnitte 52 aufzureißen oder aufzutrennen.

### Bezugszeichen

- 1: Bordwand
- 2: Anschlussbox
- 3: Kabelverbindung
- 3a: Verbindungssteckanschluss
- 3b: Verbindungssteckanschluss
- 3c: Verbindungssteckanschluss
- 3d: Verbindungssteckanschluss
- 4: Bremsensteuergerät
- 6A: BUS-Signalanbindung
- 6B: BUS-Signalanbindung
- 7: bidirektionaler BUS
- 8: Masseleiter
- 10: zentrale Lichtsteuereinheit (ECU)
- 11: Hauptkabel 11A Strang
- 11 B: Parallelstrang
- 15: Abzweigung
- 20: Seitenleuchte
- 21: vordere Umrissleuchte
- 22: Plusader
- 22A: Leitungsabschnitt
- 22B: Leitungsabschnitt
- 30: Abzweigkabel
- 31: Abzweiggehäuse
- 33: Ader
- 34: Ader
- 35: Steg
- 41: erstes Gehäuseteil
- 42: zweites Gehäuseteil
- 43: Wand
- 44: Gehäusebereich, Schale
- 45: Stechkontakt, Schneidkontakt
- 47: Verrastung
- 48: Spitze
- 50: Perforationsöffnung
- 51: Unterbrechung
- 52: Stegabschnitt
- 53: Schwächungszone

- A: Anhängerfahrzeug
- d: Dicke
- D: Dicke
- L: Gehäuselänge
- LED: Leuchtdiode
- RL: Rückleuchte links
- RR: Rückleuchte rechts
- Z: Zugfahrzeug

## Patentansprüche

1. Elektrische Kabelanordnung mit einem extrudierten Hauptkabel (11), welches über seine Länge mit einer Mehrzahl im Abstand zueinander angeordneter, jeweils zu Einzelverbrauchern führenden Abzweigungen (15) versehen ist, die sich jeweils aus einem mindestens zweiadrigen Abzweigkabel (30) und einem den Anfang des Abzweigkabels umschließenden Abzweiggehäuse (31) zusammensetzen, welches mit einem rinnenförmigen Gehäusebereich (44) auf dem Hauptkabel (11) aufsitzt, wobei mit den Adern (33, 34) des Abzweigkabels (30) verbundene Stech- oder Schneidkontakte (45) die Adern des Hauptkabels (11) kontaktieren, und sich das Hauptkabel (11) aus einem ersten Strang (11A) mit mindestens zwei Stromadern (8, 22) und einem Parallelstrang (11 B) mit mindestens einer weiteren Stromader (7) zusammensetzt, und dass die beiden Stränge (11A, 11B) über einen mitextrudierten Steg (35) verbunden sind, der auf jenen Längsabschnitten, auf denen sich rinnenförmige Gehäusebereiche (44) befinden, jeweils mit einer Unterbrechung (51) versehen ist, die gleich lang oder länger als der Gehäusebereich (44) ist, **dadurch gekennzeichnet, dass** sich die kontaktierten Adern in dem ersten Strang (11A) befinden, wohingegen der Parallelstrang (11 B) außerhalb des Abzweiggehäuses (31) verläuft, und dass die Wand (43) des Abzweiggehäuses (31) sich zwischen dem ersten Strang (11A) und dem Parallelstrang (11 B) erstreckt.

2. Kabelanordnung nach Anspruch 1, **dadurch gekennzeichnet, dass** die Querschnittsdicke (d) des Stegs (35) geringer als die Querschnittsdicke (D) jedes der beiden Stränge (11A, 11B) ist.

3. Kabelanordnung nach Anspruch 1 oder 2, **dadurch gekennzeichnet, dass** der Steg (35) längsperforiert ist.

4. Kabelanordnung nach Anspruch 3, **dadurch gekennzeichnet, dass** die Perforationsöffnungen (50) der Längsperforierung jeweils kürzer als die rinnenförmigen Schalen (44) sind, und dass die nicht perforierten Stegabschnitte (52) Schwächungszonen (53) aufweisen, die aufreißbar oder auftrennbar sind.

5. Kabelanordnung nach Anspruch 3, **dadurch gekennzeichnet, dass** die Perforationsöffnungen (50) jeweils länger als die rinnenförmigen Schalen (44) sind, wobei einzelne dieser Perforationsöffnungen (50) zugleich die Unterbrechungen (51) bilden.

6. Kabelanordnung nach Anspruch 1 oder 2, **dadurch gekennzeichnet, dass** der Steg (35) durchgehend ist und in Längsrichtung betrachtet Schwächungszonen aufweist, die aufreißbar oder auftrennbar sind.

7. Kabelanordnung nach einem der vorangehenden Ansprüche, **dadurch gekennzeichnet, dass** sich durch die Unterbrechung (51) hindurch eine Wand (43) des Abzweiggehäuses (31) erstreckt, und dass die Wand (43) in einem in einer Spitze (48) auslaufenden Dreieck endet.

## Claims

1. Electrical cable arrangement having an extruded main cable (11) which is provided over its length with a plurality of branches (15), which are arranged at a distance from one another, which each lead to individual loads and which are each made up of an at least twin-core branching cable (30) and a branching housing (31) which surrounds the start of the branching cable and is fitted on the main cable (11) by way of a channel-like housing region (44), wherein piercing or insulation-displacement contacts (45) which are connected to the cores (33, 34) of the branching cable (30) make contact with the cores of the main cable (11), and the main cable (11) is made up of a first section (11A) having at least two live wires (8, 22) and a parallel section (11B) having at least one further live wire (7), and wherein the two sections (11A, 11B) are connected by means of a co-extruded web (35) which is provided with a respective interruption (51), which is of equal length to or is longer than the housing region (44), on those longitudinal sections on which channel-like housing regions (44) are located, **characterized in that** the cores with which contact is made are located in the first section (11A), whereas the parallel section (11B) runs outside the branching housing (31), and **in that** the wall (43) of the branching housing (31) extends between the first section (11A) and the parallel section (11B).

2. Cable arrangement according to Claim 1, **characterized in that** the cross-sectional thickness (d) of the web (35) is smaller than the cross-sectional thickness (D) of each of the two sections (11A, 11B).

3. Cable arrangement according to Claim 1 or 2, **characterized in that** the web (35) is longitudinally perforated.

4. Cable arrangement according to Claim 3, **characterized in that** the perforation openings (50) of the longitudinal perforation are each shorter than the channel-like shells (44), and **in that** the non-perforated web sections (52) have weakening zones (53) which can be torn open or ripped open.

5. Cable arrangement according to Claim 3, **characterized in that** the perforation openings (50) are each longer than the channel-like shells (44), wherein individual ones of the said perforation openings (50) simultaneously form the interruptions (51).

6. Cable arrangement according to Claim 1 or 2, **characterized in that** the web (35) is continuous and has weakening zones, which can be torn open or ripped open, as viewed in the longitudinal direction.

7. Cable arrangement according to one of the preceding claims, **characterized in that** a wall (43) of the branching housing (31) extends through the interruption (51), and **in that** the wall (43) ends in a triangle which terminates in a point (48).

## Revendications

1. Agencement de câble électrique comprenant un câble principal extrudé (11) qui est pourvu sur sa longueur d'une pluralité de branchements (15) disposés à distance les uns des autres et conduisant à chaque fois à des consommateurs individuels, qui se composent à chaque fois d'un câble de branchement (30) à au moins deux conducteurs et d'un boîtier de branchement (31) entourant le début du câble de branchement, lequel boîtier de branchement repose avec une région de boîtier en forme de rigole (44) sur le câble principal (11), des contacts auto-perçants ou autodénudants (45) connectés aux conducteurs (33, 34) du câble de branchement (30) venant en contact avec les conducteurs du câble principal (11), et le câble principal (11) étant constitué d'un premier tronçon (11A) comprenant au moins deux conducteurs électriques (8, 22) et d'un tronçon parallèle (11B) comprenant au moins un conducteur électrique supplémentaire (7), et les deux tronçons (11A, 11B) étant connectés par le biais d'une nervure coextrudée (35) qui est pourvue, sur les portions longitudinales sur lesquelles se trouvent des régions de boîtier en forme de rigole (44), à chaque fois d'un orifice (51) qui est de même longueur ou plus long que la région de boîtier (44), **caractérisé en ce que** les conducteurs mis en contact se trouvent dans le premier tronçon (11A), tandis que le tronçon parallèle (11B) s'étend à l'extérieur du boîtier de branchement (31), et **en ce que** la paroi (43) du boîtier de branchement (31) s'étend entre le premier tronçon (11A) et le tronçon parallèle (11B) .

2. Agencement de câble selon la revendication 1, **caractérisé en ce que** l'épaisseur en section transversale (d) de la nervure (35) est inférieure à l'épaisseur en section transversale (D) de chacun des deux tronçons (11A, 11B).

3. Agencement de câble selon la revendication 1 ou 2, **caractérisé en ce que** la nervure (35) est pourvue de perforations longitudinales.

4. Agencement de câble selon la revendication 3, **caractérisé en ce que** les ouvertures perforées (50) des perforations longitudinales sont dans chaque cas plus courtes que les coques en forme de rigole (44) et **en ce que** les portions de nervure non perforées (52) présentent des zones d'affaiblissement (53) qui peuvent être déchirées ou sectionnées.

5. Agencement de câble selon la revendication 3, **caractérisé en ce que** les ouvertures perforées (50) sont à chaque fois plus longues que les coques en forme de rigole (44), certaines de ces ouvertures perforées (50) formant en même temps les orifices (51).

6. Agencement de câble selon la revendication 1 ou 2, **caractérisé en ce que** la nervure (35) est continue et présente, vu dans la direction longitudinale, des zones d'affaiblissement qui peuvent être déchirées ou sectionnées.

7. Agencement de câble selon l'une quelconque des revendications précédentes, **caractérisé en ce qu'**une paroi (43) du boîtier de branchement (31) s'étend à travers l'orifice (51), et **en ce que** la paroi (43) se termine par un triangle se terminant en pointe (48).
